# EUROPEAN PATENT APPLICATION

(11) **EP 1 742 397 A2**
(43) Date of publication of application: **10.01.2007**
(21) Application number: 06116627.8
(22) Date of filing: 05.07.2006
(51) Int. Cl.: H04H 1/00

(54) **Providing identification of broadcast transmission pieces**

(30) Priority: 08.07.2005 US 178254
(71) Applicant: Nokia Corporation, 02150 Espoo (FI)
(72) Inventor: Kopra, Toni, 01450 Vantaa (FI); Viljamaa, Timo-Pekka, 00260 Helsinki (FI); Beletski, Oleg, 02230 Espoo (FI); Schembri, Ingrid, 01600 Vantaa (FI); Heinonen, Jukka, 00200 Helsinki (FI); Von Knorring, Tony Niklas, 00790 Helsinki (FI)
(74) Representative: Brockman, Pertti Erik

(57) **Abstract**

A system for providing identification of a broadcast piece of information transmitted in a broadcast media stream by a broadcast system is provided. A reception server (202) receives and analyzes broadcast piece of information. A recognition server (204) connected to the reception server (202) obtains identification data of the broadcast piece of information on the basis of the analysis. A streamer server (206) connected to the recognition server (204) attaches the identification data to a service transmission transmitted over a radio interface of a cellular telecommunication system and associated with the broadcast media stream, the service transmission comprising information about the content of the broadcast media stream.

## Description

### Field

The invention relates to providing identification of a broadcast piece of information transmitted in a broadcast media stream by a broadcast system. The invention also relates to enhancing the use of a media device. Especially the invention relates to systems where media devices are configured to receive a broadcast media stream from a broadcast system and receive a service transmission transmitted over a radio interface of a cellular telecommunication system and associated with the broadcast media stream.

### Background

Broadcasters, such as television and radio broadcasters, have taken steps forward to provide an audience with digital supplementary services, such as program information, news, weather forecasts, competitions and other related content, in addition to a traditional media stream. The digital supplementary services are usually delivered to the audience over the Internet using the audiences' personal computers or other media devices capable of connecting to the Internet.

More mobility is provided for the audience by media devices of cellular telecommunication systems, which media devices are equipped with a receiver, such as an FM radio, for receiving media streams broadcast by broadcasters. Broadcasters typically provide Internet services, which can be accessed by media devices, such as one equipped with a WAP (Wireless Application Protocol), capable of connecting to such a service.

In order to be interesting, the content of the supplementary service should provide useful information for the user. The supplementary services are associated with a broadcast media stream and the services may provide visual information for the users of the media streams. The content of the services may comprise identification data relating to the broadcast items, such as music tracks.

One problem with designing the supplementary services lies in the content production. Presently, the content production for supplementary services is performed manually using computer based tools. This makes content production time consuming and expensive.

### Brief description of the invention

An object of the invention is to provide an improved solution for providing an identification of a broadcast piece of information transmitted in a broadcast media stream. An object of the invention is to provide an enhanced solution of producing content for a service transmission transmitted over a radio interface of a telecommunication system and associated with a broadcast media stream. According to an aspect of the invention, there is provided a method of providing an identification of a broadcast piece of information transmitted in a broadcast media stream by a broadcast system, the method comprising: analyzing a broadcast piece of information; obtaining identification data of the broadcast piece of information on the basis of the analysis; attaching the identification data to a service transmission transmitted over a radio interface of a cellular telecommunication system and associated with the broadcast media stream, the service transmission comprising information about the content of the broadcast media stream.

According to another aspect of the invention, there is provided a system for providing an identification of a broadcast piece of information transmitted in a broadcast media stream by a broadcast system, comprising: a reception server receiving and analyzing a broadcast piece of information; a recognition server operationally connected to the reception server and obtaining identification data of the broadcast piece of information on the basis of the analysis; a streamer server operationally connected to the reception server and attaching the identification data to a service transmission transmitted over a radio interface of a cellular telecommunication system and associated with the broadcast media stream, the service transmission comprising information about the content of the broadcast media stream.

According to another aspect of the invention, there is provided a method of providing a service transmission transmitted over a radio interface of a cellular telecommunication system and associated with a broadcast media stream transmitted by a broadcast system, the service transmission comprising information about the content of the broadcast media stream, the method comprising analyzing the broadcast piece of information; obtaining identification data of the broadcast piece of information on the basis of the analysis, and attaching the identification data to the service transmission.

According to yet another aspect of the invention, there is provided a system for providing an identification of a broadcast piece of information transmitted in a broadcast media stream by a broadcast system, comprising: a reception server receiving and analyzing a broadcast piece of information, sending the broadcast piece of information to a recognition server and receiving identification data of the broadcast piece of information from the recognition server; a streamer server operationally connected to the reception server and attaching the identification data to a service transmission transmitted over a radio interface of a cellular telecommunication system and associated with the broadcast media stream, the service transmission comprising information about the content of the broadcast media stream.

The invention provides several advantages. The invention enables a cost effective and automated solution for producing supplementary service content. In an embodiment of the invention, the service content may comprise artist information relating to music track transmitted in a broadcast stream. The artist information may be automatically generated and attached to the supplementary service transmission. The artist information may comprise the artist performing the track, the track name, and the album the track is included in, for example.

In an embodiment of the invention, the broadcast stream is analysed, and on the basis of the analysis identification data relating to the current stream content is obtained. The identification data is transmitted in the supplementary service transmission. The analysis and obtaining of the information may be performed without supervision.

### List of drawings

In the following, the invention will be described in greater detail with reference to the embodiments and the accompanying drawings, in which

Figure 1 illustrates an example of a system in which embodiments of the invention may be utilized;.

Figure 2 illustrates an example of the structure of a supplementary service creation system,

Figure 3 illustrates an example of the operation of a reception server, and

Figure 4 illustrates en example of the operation of a streamer server and

Figure 5 illustrates another example of the structure of the supplementary service creation system.

### Description of embodiments

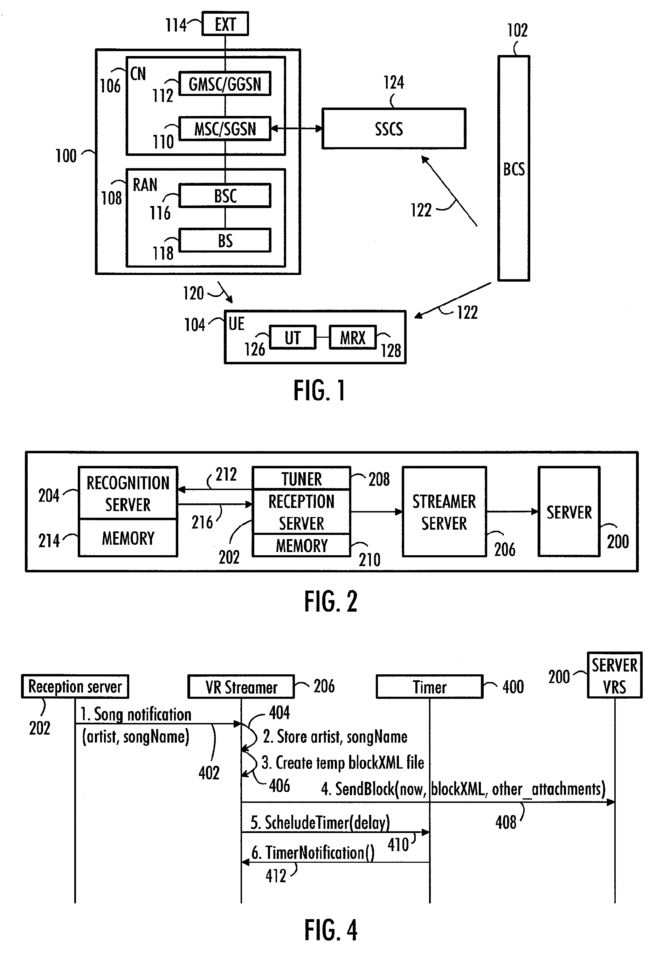

Figure 1 illustrates an example of a simplified structure of an environment in which embodiments of the invention may be utilized. The environment comprises a communication network 100 of a cellular telecommunications system, a broadcast system 102, a media device 104 of the cellular telecommunications system and a supplementary service creation system 124.

The cellular telecommunications system is based on, for example, GSM (Global System for Mobile Communications) or UMTS (Universal Mobile Telecommunications System). The radio interface used in the communication between the communication network and the media device may be realized using WCDMA (Wideband Code Division Multiple Access) technology, GPRS (General Packet Radio Service) or WLAN (Wireless Local Area Network), or any other similar solution offering services. The structure and functions of cellular telecommunications systems are known to a person skilled in the art, and not all network elements of the system are illustrated.

The communication network 100 provides the media device 104 with bi-directional communication services. The broadcast system 102 provides the media device 104 with a media stream 122 using, for example, a radio or television broadcast.

The communication network 100 may represent the fixed infrastructure of the cellular telecommunication system. The communication network 100 may comprise a core network (CN) 106 representing a radio-independent layer of the communication network 100, and at least one radio access network (RAN) 108. The core network 106 may include network elements of different generations of cellular telecommunications systems. The radio access network 108 provides the media device 104 with a radio interface using radio access technology. The media device thus has a bi-directional radio connection 120 with the radio access network 108.

In the example shown in Figure 1, the core network 106 is exemplified in terms of GSM terminology using both circuit-switched and packet-switched network elements. The packet-switched network elements are described in terms of a GPRS (General Packet Radio Service) system, which provides the media device 104 with access to external data networks over GSM and supports standard protocols, such as TCP (Transmission Control Protocol) and IP (Internet Protocol). The invention is not, however, restricted to the systems, division of systems, or protocols used in the system described in the examples, but can be applied to any cellular telecommunications system.

A center 110 represents a mobile services switching center (MSC) and a serving GPRS support node (SGSN) enabling circuit-switched and packet-switched signaling, respectively, in the cellular telecommunications system.

A function of the serving GPRS support node is to transmit packets to and receive them from the media device 104 supporting packet-switched transmission. The serving GPRS support node includes subscriber information and location information about the media device 104.

The core network 106 may also have a gateway unit 112 representing both a gateway mobile service switching center (GMSC) and a gateway GPRS support node (GGSN). The GMSC attends to the circuit-switched connections between the core network 106 and external networks (EXT) 114 such as a public land mobile network (PLMN) or a public switched telephone network (PSTN), and the GGSN attends to the packet-switched connections between the core network 106 and external networks 114 such as the Internet.

The center 110 controls the radio access network 108, which may comprise at least one base station controller (BSC) 116 controlling at least one base station (BS) 118. The base station controller 116 may also be called a radio network controller, and the base station 118 may be called a node B.

The media device 104 comprises a user terminal 126 for communication in the cellular telecommunication system using a radio interface provided by the base station 118. The media device 104 further comprises a media receiver 128, such as an FM receiver or a television receiver, for receiving a media stream 122 provided by the broadcast system 102.

The base station 118 may communicate with the media device 104 using GPRS, in which data is transferred in packets that contain address and control data in addition to the actual content data. Several connections may employ the same transmission channel simultaneously. This kind of packet switching method is suitable for data transmission where the data to be transmitted is generated in bursts. In such a case, it is not necessary to allocate a data link for the entire duration of transmission but only for the time it takes to transmit the packets. This reduces costs and saves capacity considerably during both the set-up and the use of the communication network 100.

The media stream 122 is broadcasted by the broadcast system 102. The media stream 122 may include, for example, a radio or television program, a commercial or an announcement. The media stream content may be described as a continuous transmission of broadcast pieces of information. The broadcast pieces of information may include speech clips, music tracks, or pictures, video clips or other multimedia clips. The media device is configured to receive the broadcasted media stream 122 with the media receiver 128.

The environment of Figure 1 further comprises a supplementary service creation system 124 connected to the communication network 100 and the broadcast system 102 for providing the media device 104 with a supplementary service associated with the media stream 122 by using the radio interface of the cellular telecommunication system. The supplementary service creation system 124 may be realized with one or more computers, such as personal computers or workstations and other components with an interface to the communication network 100 and the broadcast system 102. The physical location of the supplementary service creation system 124 is not relevant as far as required connections exist.

The supplementary service creation system 124 may be connected to the center 110, the gateway unit 112, the radio access network 106, or other parts of the communication network 100. The supplementary service creation system 105 may be connected to the communication network 100 via an external network 114. In an embodiment, the supplementary service creation system 105 communicates with the communication network 100 over the radio interface of the cellular telecommunication system.

Thus, the media device 104 may be provided with a supplementary service which is associated and/or synchronized with the broadcasted media stream 122 transmitted by the broadcast system. In general, the supplementary service may provide the user of the media device with visual information relative to the content of the broadcast media stream 122. The service may be interactive. The service may include information about the music played at the moment, DJ's messages to the listeners or the like. The signal may include any of these features alone or as a combination thereof. The service may include information about deliverable or purchasable objects related to the media stream, such as ring tones, desktop wallpapers or logos.

The service may be provided to the media device 104 utilizing a communication channel parallel to the broadcast channel used in delivering the media stream 122 to the user. This is called a parallel channel operation. A logical address may be dedicated to the service 120 so that the service 120 may be accessed by using the logical address of the supplementary service creation system 124. The content of the service may vary as a function of time and possibly as a function of the content of the media stream 122. The service 120 provides a bit stream to the media device 104, the bit stream including information content, such as graphical information, text information, audio information, a computer program, Braille, vibration, or any combination thereof. In an embodiment, the content of the service 120 is displayed on a display of the media device 104.

A service provider is a party possessing rights for relevant digital content of the service 120, has a distribution system for providing the media device 104 with the service 120, and possibly capability to bill the user for the service 120. The service provider's delivery system is responsible for receiving and handling delivery requests and delivering the service 120 to the media device 104.

In the media device 104, the service provides an integrated user experience, allowing the user to start both listening to a media stream 122 and receiving the content of the service relating to the media stream 122. The operation of the media is based on two channels, the broadcast channel and the parallel channel enabled by the cellular telecommunication system.

In an embodiment, the service concept may be called a visual radio. The broadcast system broadcasts a radio transmission 122 received by the media device 104. The DJ or announcer of the radio transmission may advertise the service realized with the parallel channel. The user of the media device may subscribe to the service by making contact with the server and downloading suitable data which enables the user's media device to receive the service. The data may be called associating data and it may comprise information which provides a linkage between the service and the media stream and which identifies the service transmission.

The associating data may include the following type of information: a radio service address, a service identification, an object identification, a radio broadcaster identification number, a program identification number, a traffic announcement identification number, a traffic program identification number, a program item number, an emergency warning message, a music/speech indicator, a radio frequency utilized by a media stream, a program service name, a program type identification number, and a country code.

Figure 2 illustrates an example of the structure of the supplementary service creation system 124. The structure may vary depending on the nature of the supplementary service and the structure disclosed in Figure 2 merely illustrates one possible implementation.

In an embodiment, the supplementary service creation system 124 comprises a server 200, a reception server 202, a recognition server 204 and a streamer server 206. The server 200 may provide and manage the content flow between the media device 104 and the communication network 100. The server 200 may also facilitate timed delivery of content of the service to the media device 104 and manage content flow shown on the screen of the media device 104 in synchronization with the media stream 122. The server 200 may be in connection with the broadcast system 102 and provide possible interactive service between the broadcast system and the users receiving both the broadcast stream and the supplementary service.

The server 200, the reception server 202, the recognition server 204 and the streamer server 206 may be interconnected with a connection utilising TCP/IP-protocol, for example. In such a case, the transmission between the servers may be realized using http (hyper text transmission protocol) commonly used in Internet connections. The servers may be interconnected in various ways as one skilled in the art is aware. The communication between the servers may also be realized in many different ways. The servers may be realized with a computer or using several separate computers. The servers may also be realized with software running on a computer or on several separate computers.

The reception server 202 is configured to monitor the broadcast stream 122 transmitted by the broadcast system 102. The reception server 202 may comprise a radio tuner 208. The radio tuner may be realized with a radio card connected to the server 202 or a separate radio connected to a line-in port of the reception server 202. The broadcast stream comprises broadcast pieces of information which may be music tracks, video clips or other multimedia clips, for example. The reception server may also comprise a memory 210.

The reception server 202 analyses broadcast pieces of information. There are several possible ways of performing the analysis. In an embodiment, the reception server 202 is configured to sample the received broadcast pieces of information and analyze the broadcast piece of information in frequency domain and obtain analysis results. The frequency domain analysis or spectral analysis is one possibility. The analysis results may be described as one or more audio fingerprints or audio landmarks of the broadcast piece of information. The analysis may produce a set of audio fingerprints or landmarks which is small in size compared to the original piece. The set may comprise one or more audio fingerprints or landmarks. The analysis result of broadcast piece of information is a sample which describes the original piece of information in a very compressed format. It has been shown that such analysis results may be produced that identify the original broadcast piece with a large reliability. By comparing the analysis results of a broadcast piece to a large set of known analysis results, the original broadcast piece may be identified.

The reception server 202 is further configured to transmit the analysis results or the set of audio fingerprints 212 to a recognition server 204. As the size of the set is small the transmission capability needed for such a transmission is small.

The recognition server 204 is configured to receive the set of audio fingerprints 212 transmitted by the reception server 202. The recognition server 204 may comprise a memory 214 storing a large set of known audio fingerprints. The recognition server 204 compares the received set of audio fingerprints with the set of known audio fingerprints in the memory 214. If a match with a predetermined accuracy was found, the broadcast piece of information from which the set of audio fingerprints was obtained is identified and identification data can be produced. In such a case the recognition server 204 is configured to send a notification 216 with the identification data back to the reception server 202. The identification data may comprise information about at least one of the following: the name of the broadcast piece of information, the artists performing in the broadcast piece, style of the broadcast piece, titles of albums the broadcast piece is included in, and one or more images or Internet links relating to the broadcast piece or artist. The identification data may also comprise other information.

If a match was not found, the broadcast piece of information, from which the set of audio fingerprints was obtained, cannot be identified. In such a case, the recognition server 204 is configured to send a notification 216 back to the reception server 202. The notification may be an empty string or a predetermined string in place of the expected identification data, for example.

The reception server 202 is configured to receive a notification 216 sent by the recognition server 204. In an embodiment, the reception server writes the received notification in a log file and stores the log file in the memory 210. The written entry in the log file may comprise the identification data or an empty string indicating unsuccessful identification.

In an embodiment, the reception server 202 is configured to perform the analysis of the broadcast piece of information and communication with the recognition server 204 at predetermined time intervals. The time interval may be for example a few seconds. In an embodiment, a log file entry is written every three or four seconds.

In an embodiment, the entry written in the log file by the reception server 202 in the case of a successful identification comprises at least some of the following fields:

21/09/2004,12:44:50.526,

21/09/2004 15:44:47.0

12345,

0.1880,

00:01:23.4,

The John Doe Big Band,

Big Hits,

The Hit Song.

**The first parameter** (21/09/2004, 12:44:50.526) **is a time stamp of the recognition server 204. The second parameter** (21/09/2004 15:44:47.0) is a time stamp of the reception server 202. The third parameter (12345) is the id of the recognition server 204 for the broadcast piece. The fourth parameter (0.1880) is a value indicating the amount of differences between the stored set of audio fingerprints of the original broadcast piece and the set of audio fingerprints generated by the reception server 202. The value may be a bit error rate or other corresponding value. The fifth parameter (0 0 : 01: 23. 4) is the duration of the original broadcast piece. The sixth parameter (The John Doe Big Band) is the name of the artist. The seventh parameter (Big Hits) is the name of an album the broadcast piece is included in and the eighth parameter (The Hit Song) is the name of the original broadcast piece.

The log entry may comprise also other information, such as the style of the broadcast piece, an image relating to the broadcast piece or artist, or an Internet link relating to the broadcast piece or artist.

In an embodiment, the entry written in the log file by the reception server 202 in the case of an unsuccessful identification comprises at least some of the following fields:

21/09/2004, 12:44:53.451,

21/09/2004 15:44:50.0

Song not found.

The first parameter (21/09/2004, 12:44:53.) is a time stamp of the recognition server 204. The second parameter (21/09/2004 15:44:50.0) is a time stamp of the reception server 202. The third parameter (Song not found) is the id of the recognition server 204 for an unrecognized broadcast piece.

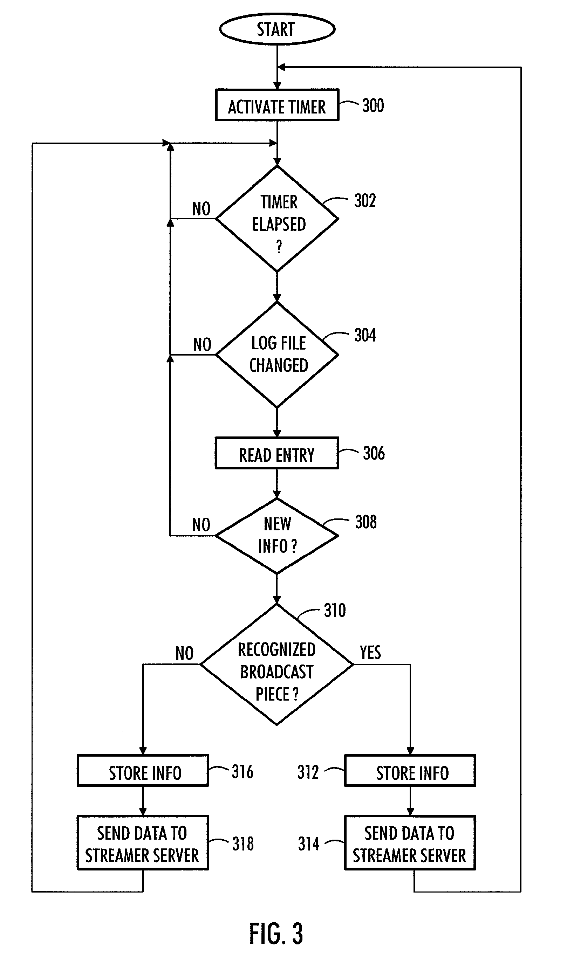

The reception server 202 is configured to monitor changes in the log file. Figure 3 illustrates this procedure with a flowchart. In step 300, the reception server 202 schedules a timer callback to be activated for every second.

In step 302, the reception server 202 checks if the timer has elapsed. If this is the case, the reception server 202 checks in step 304 if a new line was added to the audio fingerprint log file. If this has not happened, the procedure continues from step 302.

In step 306, a new line had been detected. The reception server 202 reads the new line from the log file and parses it to get the reception server time stamp, id of the broadcast piece, artist and name of the broadcast piece in case of a successful recognition or the reception server time stamp and id for an unrecognized broadcast piece in case of an unsuccessful recognition.

In step 308, the reception server 202 compares the id to the previous id in stored memory in order to determine whether transmission of a new broadcast piece of information has started in the broadcast stream 122. If this is not the case, the procedure continues from step 302.

In step 310, the reception server 202 checks whether the new broadcast piece of information was successfully recognized. In such a case the reception server 202 stores the new id in memory in step 312. The reception server 202 further adds a line containing the Listening Server time stamp, the artist and the name of the broadcast piece of information to its own log file and sends in step 314 a notification message containing at least some of the identification data to the streamer server 206 using the POST method of the http protocol, for example. After that the procedure continues from step 300.

In a case of unsuccessful recognition the reception server 202 stores the new id in memory in step 316. The reception server 202 further adds a line containing the Listening Server time stamp, and a predetermined text string for an unrecognized broadcast piece to its own log file and sends in step 318 a notification message containing at least some of the identification data to the streamer server 206 using the POST method of the http protocol, for example. After that the procedure continues from step 302.

In an embodiment, the reception server 202 may keep a reception server log file of the id entries received from the recognition server 204. In an embodiment, a log file entry for successfully recognized broadcast piece is of following format:

21/09/2004,12:44:50.526,

The John Doe Big Band,

Another Hit Song.

The first parameter (21/09/2004, 12:44:50.526) is a time stamp of the reception server 204. The second parameter (The John Doe Big Band) is the name of the artist. The third parameter (Another Hit Song) is the name of the original broadcast piece.

In an embodiment, a log file entry for unsuccessfully recognized broadcast piece is of following format:

21/09/2004,12:45:00.111,

Song not found

The first parameter (21/09/2004,12:45:00.111) is a time stamp of the recognition server 204. The second parameter (The John Doe Big Band) is the name of the artist. The third parameter (Song not found) is the id of the recognition server 204 for an unrecognized broadcast piece.

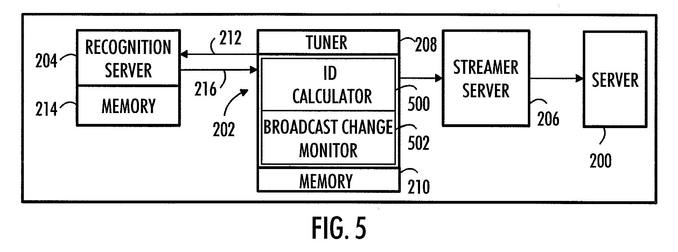

The message diagram of Figure 4 illustrates an example of the operation of the streamer server 206. The diagram illustrates the signaling between the server 200, the reception server 202, the streamer server 206 and a timer 400.

The streamer server 206 and the server 200 are responsible for generating a supplementary service content stream based on incoming events. The incoming events may describe the broadcast piece currently playing on a radio channel. The supplementary service stream consists of blocks that are scheduled to be displayed in the supplementary service enabled receivers.

The streamer server 206 continuously monitors messages from the reception server 202. The reception server transmits a broadcast piece notification 402 to the streamer server 206, as illustrated in Figure 3. The streamer server 206 receives the identification info. In this example, it is assumed for simplicity that only the name of the broadcast piece and the name of the performing artist are transmitted. The streamer server 206 stores 404 the incoming identification data in memory for later use. The data may be stored in variables named currentSongName and currentArtist, for example.

The streamer server 206 generates 406 a visual radio block XML file containing the broadcast piece identification data in a 'now playing' slide. The streamer server may store a template containing some pre-filled data such as headers and reserved places for the identification data. The data received form the reception server is stored in the reserved places. The block XML file may be a temporary file in the file system of the streamer server and it can be deleted later.

The streamer server 206 signals 408 the block XML file to the server 200. The block is scheduled for imminent display. The duration and expiration time are set to a predetermined value, such as 1 minute, for example. The server 200 sends the block in the supplementary service stream.

The streamer server 206 schedules 410 a timer callback to be activated using the following formula: callbacktime = duration - scheduling delay. The scheduling delay depends on the server 200 and network characteristics and in an embodiment it is in the order of few seconds. The values may vary depending on the system where the solution is implemented. In this example, a value of 4 seconds as the scheduling delay is used. Thus, the callback is scheduled at 56 seconds.

If the timer callback 412 occurs, the streamer server 206 goes to step 408 using the currentSongName and currentArtist as input and then proceeds with step 410, effectively repeating the currently displayed information for an extra minute.

If the timer callback does not occur but instead a new broadcast piece identification data is received from the reception server 202, the streamer server 206 clears the timer callbacks and proceeds as illustrated above in step 404.

At any time of the above described procedure the streamer server may receive a signal 402 from the reception server.

The above procedure assumed a successful recognition of a broadcast piece. In the event of unsuccessful recognition of a broadcast piece the procedure may be slightly different.

When the streamer server 206 receives identification data from the reception server and notices that the data contains id for an unrecognized broadcast piece the streamer server clears any scheduled timer callbacks.
The streamer server 206 reads a predetermined logo XML block from memory and sends the block to the server 200 for display. The predetermined block may comprise general data relating to the broadcast transmission, such as the logo of the broadcast station. The block is scheduled for imminent display. The duration and expiration time are set to a predetermined value such as 10 seconds using a timer.

Figure 5 illustrates another embodiment of the invention. In the embodiment of Figure 5, the reception server 202 comprises a fingerprint calculator 500 configured to analyze broadcast piece of information and a broadcast change monitor 502 configured to detect that a broadcast piece of information transmitted in a broadcast media stream has changed and to signal the change to the streamer server.

A radio tuner 208 receives a broadcast transmission consisting of broadcast pieces of information. The fingerprint calculator 500 is configured to sample the received broadcast pieces of information and analyze the broadcast piece of information in frequency domain and obtain analysis results. The fingerprint calculator 500 is configured to communicate with the recognition server 204 as described earlier in connection with Figure 2. The fingerprint calculator 500 receives identification data from the recognition server 204.

The interface between the fingerprint calculator 500 and the broadcast change monitor 502 may utilize various methods. In an embodiment, the interface the fingerprint calculator 500 and the broadcast change monitor 502 is initialized by the broadcast change monitor 502 creating a predetermined listening socket. Next, the fingerprint calculator 500 makes a connection to the broadcast change monitor 502, which accepts the incoming connection request. After these steps the connection is in operational mode and the initialization is finished.

The broadcast change monitor 502 starts reading data from the socket. In an embodiment, the fingerprint calculator may send identification data to the broadcast change monitor 502 periodically. The format of the data is predetermined. In an embodiment, the data is formatted so that it contains following data fields:

| **Field name** | **Field data type** |
|---|---|
| Timestamp of recognition server | UTF-8 encoded string, 24 bytes |
| Timestamp of reception server | UTF-8 encoded string, 24 bytes |
| Broadcast piece ID | long (8 bytes) |
| Difference value | floating point (8 bytes) |
| Offset in broadcast piece | UTF-8 encoded string, 12 bytes |
| Length of artist name | 1 byte |
| Artist name | UTF-8 encoded string |
| Length of album name | 1 byte |
| Album name | UTF-8 encoded string |
| Length of broadcast piece name | 1 byte |
| Broadcast piece name | UTF-8 encoded string |

The data types in the above table are examples of possible data types. Other data types are also possible.

After having received the message the broadcast change monitor processes the message as in the example of Figure 2. It compares the received data with the previous stored data stored in a memory and determines if a broadcast piece of information transmitted in a broadcast media stream has changed.

In an embodiment, the interface the fingerprint calculator 500 and the broadcast change monitor 502 is realized with http POST requests. In such a case, the broadcast change monitor may be implemented as a Java Servlet (APS, PHP page or CGI script) that is able to accept http POST requests and process them. The fingerprint calculator 500 may send an http request with identification data periodically to the broadcast change monitor 502. Below is an example of data sent in a POST request:

POST /path/changeMonitor.class HTTP/1.0

User-Agent: FPCalc

Content-Type: text/plain

Content-Length: nn

21/09/2004,12:44:50.526

21/09/2004 15:44:47.0

12345

0.1880

00:01:23.4

The John Doe Big Band

Big Hits

The Hit Song

The first four lines are headers of the POST message. The first parameter (21/09/2004, 12:44:50.526) is a time stamp of the recognition server 204. The second parameter (21/09/2004 4 15: 44:47.0) is a time stamp of the reception server 202. The third parameter (12345) is the id of the recognition server 204 for the broadcast piece. The fourth parameter (0.1880) is a value indicating the amount of differences between the stored set of audio fingerprints of the original broadcast piece and the set of audio fingerprints generated by the reception server 202. The value may be a bit error rate or other corresponding value. The fifth parameter (0 0 : 01: 23. 4) is the duration of the original broadcast piece. The sixth parameter (The John Doe Big Band) is the name of the artist. The seventh parameter (Big Hits) is the name of an album the broadcast piece is included in and the eighth parameter (The Hit Song) is the name of the original broadcast piece.

The broadcast change monitor 502 can respond for example by sending a no content code to the fingerprint calculator 500 to indicate successful acceptance of the received data:

HTTP/1.1 204 No Content

In an embodiment, the interface the fingerprint calculator 500 and the broadcast change monitor 502 is realized with soap (Simple Object Access Protocol) messages. Soap is a simple protocol created for the exchange of information in a decentralized, distributed environment. Below is an example of a request packaged into a soap message format and sent over HTTP via a POST request from the fingerprint calculator to broadcast change monitor:

POST /BroadcastMonitor HTTP/1.1

Host: www.radioreceiver.org

Content-Type: application/soap+xml; charset=utf-8

Content-Length: nnn

<?xml version="1.0"?>

<soap:Envelopexmlns:soap= "http://www.w3.org/2001/12/soap-envelope"

soap:encodingStyle="http://www.w3.org/2001/12/soap-encoding"> <soap:Body xmlns:m="http://www. radiore-ceiver.org/recognition">

<m:NotifySongInfo>

<m:RecognitionTimestamp>21/09/2004,12:44:50.526 </m: RecognitionTimestamp>

<m:ReceiverTimestamp>21/09/2004 15:44:47.0 </m: Receiver-Timestamp>

<m:SongId>12345</m: SongId>

<m:Distance>0.1880</m: Distance>

<m:SongOffset>00:01:23.4</m:SongOffset >

<m:ArtistName>The John Doe Big Band</m:ArtistName >

<m:AlbumName>Big Hits</m:AlbumName >

<m:SongName>The Hit Song</m:SongName >

</m: NotifySongInfo >

</soap:Body></soap:Envelope>

The message comprises same identification data as the previous examples.

The broadcast change monitor 502 can respond for example by sending a confirmation to the fingerprint calculator 500 to indicate successful acceptance of the received data:

HTTP/1.1 200 OK

Content-Type: application/soap; charset=utf-8

Content-Length: nnn<?xml version="1.0"?>

<soap:Envelope

xmlns:soap="http://www.w3.org/2001/12/soap-envelope"

soap:encodingStyle="http://www.w3.org/2001/12/soap-encoding"> <soap:Body xmlns:m=" http://www.radioreceiver.org /recognition ">

<m:NotifySongInfoResponse>

<m:RespCode>OK</m:RespCode>

</m:NotifySongInfoResponse >

</soap:Body></soap:Envelope>

The server 200, the reception server 202, the recognition server 204 and the streamer server 206 may be realized with one or more computers or data processing devices comprising a controller. The controller may be configured to perform at least some of the steps described in connection with the flowchart of Figure 3 and in connection with Figures 2, 4 and 5. The computers or data processing devices may comprise a memory, a display and a keyboard operationally connected to the controller. The embodiments of the invention may be implemented as one or more computer programs comprising instructions for executing a computer process for providing an identification of a broadcast piece of information transmitted in a broadcast media stream by a broadcast system, the process comprising: analyzing the broadcast piece of information; obtaining identification data of the broadcast piece of information on the basis of the analysis, attaching the identification data to a service transmission transmitted over a radio interface of a cellular telecommunication system and associated with the broadcast media stream, the service transmission comprising information about the content of the broadcast media stream.

The computer programs may be stored on a computer program distribution medium readable by a computer or a processor. The computer program medium may be, for example but not limited to, an electric, magnetic, optical, infrared or semiconductor system, device or transmission medium. It may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

The computer programs may be realized with J2SE applications or as J2EE Servlets, for example. Also other programming languages and methods may be used, as one skilled in the art knows.

Even though the invention has been described above with reference to an example according to the accompanying drawings, it is clear that the invention is not restricted thereto but it can be modified in several ways within the scope of the appended claims. For example, the communication between the server 200, the reception server 202, the recognition server 204 and the streamer server 206 may be realized in various ways. In addition to the methods described above, various distributed and non-distributed solutions may be applied. Examples of such solutions are RPC (Remote Procedure Call) and CORBA (Common Object Request Broker Architecture), message queues (a mechanisms set up to allow one or more processes to write messages that can be read by one or more other processes), shared memory (the mapping of a memory area to be shared by multiple processes), pipes, or various method calls or function calls.

## Claims

1. A method of providing identification of a broadcast piece of information transmitted in a broadcast media stream by a broadcast system, the method comprising
analyzing a broadcast piece of information;
obtaining identification data of the broadcast piece of information on the basis of the analysis;
attaching the identification data to a service transmission transmitted over a radio interface of a cellular telecommunication system and associated with the broadcast media stream, the service transmission comprising information about the content of the broadcast media stream.

2. The method of claim 1, further comprising:
performing the analysis of the broadcast piece of information on predetermined time intervals and
storing obtained identification data to a log file.

3. The method of claim 2, further comprising:
monitoring changes in the log file,
determining on the basis of a change in the log file that the broadcast piece of information transmitted in a broadcast media stream has changed, and
updating the identification data attached to a service transmission.

4. The method of claim 1, wherein the identification data comprises information about at least one of the following:
the name of the broadcast piece of information,
the artists performing in the broadcast piece,
the style of the broadcast piece,
the title of albums the broadcast piece is included in,
an image relating to the broadcast piece or artist,
an Internet link relating to the broadcast piece or artist.

5. The method of claim 1, wherein the identification data is replaced with predetermined data if the identification data could not be obtained on the basis of the analysis.

6. The method of claim 1, further comprising:
analyzing the broadcast piece of information in frequency domain and obtaining analysis results;
comparing the analysis results to a database comprising a set of analysis results of known broadcast pieces and
obtaining the identification data of the broadcast piece of information on the basis of the comparison.

7. A system for providing an identification of a broadcast piece of information transmitted in a broadcast media stream by a broadcast system, comprising:
a reception server receiving and analyzing a broadcast piece of information;
a recognition server operationally connected to the reception server and obtaining identification data of the broadcast piece of information on the basis of the analysis;
a streamer server operationally connected to the reception server and attaching the identification data to a service transmission transmitted over a radio interface of a cellular telecommunication system and associated with the broadcast media stream, the service transmission comprising information about the content of the broadcast media stream.

8. The system of claim 7, wherein the reception server is configured to perform the analysis of the broadcast piece of information at predetermined time intervals.

9. The system of claim 7, wherein the recognition server is configured to store the obtained identification data to a log file in the reception server.

10. The system of claim 9, wherein the reception server is configured to monitor changes in the log file,
determine on the basis of a change in the log file that the broadcast piece of information transmitted in a broadcast media stream has changed, and
send a notification to the streamer server with the updated identification data.

11. The system of claim 10, wherein the streamer server is configured to update the identification data attached to a service transmission on the basis of the notification.

12. The system of claim 7, wherein the recognition server is configured to replace identification data with predetermined data if the identification data could not be obtained on the basis of the analysis.

13. The system of claim 7, wherein the reception server is configured to analyze broadcast piece of information and obtain one or more audio fingerprints of the broadcast piece of information and
transmit one or more audio fingerprints of the broadcast piece of information to the recognition server.

14. The system of claim 7, wherein the recognition server is configured to transmit the identification data of the broadcast piece of information to the reception server.

15. The system of claim 13, wherein the reception server and the recognition server are configured to utilize http-protocol in transmission.

16. The system of claim 7, wherein the reception server is configured to analyze the broadcast piece of information in frequency domain and obtaining analysis results.

17. The system of claim 16, wherein the recognition server is configured to compare the analysis results to a database comprising a set of analysis results of known broadcast pieces and
obtain the identification data of the broadcast piece of information on the basis of the comparison.

18. The system of claim 7, wherein the reception server comprises
a fingerprint calculator configured to analyze the broadcast piece of information and
a broadcast change monitor configured to detect that a broadcast piece of information transmitted in a broadcast media stream has changed and to signal the change to the streamer server.

19. The system of claim 18, wherein the fingerprint calculator is configured to
communicate with the recognition server and obtain identification data, and
send the identification data to the broadcast change monitor.

20. The system of claim 18, wherein the broadcast change monitor is configured to
obtain identification data from the fingerprint calculator,
determine on the basis of the identification data if the broadcast piece of information transmitted in a broadcast media stream has changed, and, in such a case,
send information about the change to the streamer server.

21. The system of claim 19, wherein the fingerprint calculator and the broadcast change monitor communicate using soap messages.

22. The system of claim 20, wherein the broadcast change monitor and the streamer server communicate using http POST messages or soap messages.

23. A computer program product encoding a computer program of instructions for executing a computer process for providing an identification of a broadcast piece of information transmitted in a broadcast media stream by a broadcast system, the process comprising:
analyzing the broadcast piece of information;
obtaining identification data of the broadcast piece of information on the basis of the analysis,
attaching the identification data to a service transmission transmitted over a radio interface of a cellular telecommunication system and associated with the broadcast media stream, the service transmission comprising information about the content of the broadcast media stream.

24. A computer program distribution medium readable by a computer and encoding a computer program of instructions for executing a computer process for providing an identification of a broadcast piece of information transmitted in a broadcast media stream by a broadcast system, the process comprising:
analyzing the broadcast piece of information;
obtaining identification data of the broadcast piece of information on the basis of the analysis,
attaching the identification data to a service transmission transmitted over a radio interface of a cellular telecommunication system and associated with the broadcast media stream, the service transmission comprising information about the content of the broadcast media stream.

25. The computer program distribution medium of claim 24, the distribution medium including at least one of the following media: a computer readable medium, a program storage medium, a record medium, a computer readable memory, a computer readable software distribution package, a computer readable signal, a computer readable telecommunications signal, and a computer readable compressed software package.

26. A method of providing a service transmission transmitted over a radio interface of a cellular telecommunication system and associated with a broadcast media stream transmitted by a broadcast system, the service transmission comprising information about the content of the broadcast media stream, the method comprising
analyzing the broadcast piece of information;
obtaining identification data of the broadcast piece of information on the basis of the analysis, and
attaching the identification data to the service transmission.

27. A system for providing an identification of a broadcast piece of information transmitted in a broadcast media stream by a broadcast system, comprising:
a reception server receiving and analyzing a broadcast piece of information, sending the broadcast piece of information to a recognition server and receiving identification data of the broadcast piece of information from the recognition server;
a streamer server operationally connected to the reception server and attaching the identification data to a service transmission transmitted over a radio interface of a cellular telecommunication system and associated with the broadcast media stream, the service transmission comprising information about the content of the broadcast media stream.

28. The system of claim 14, wherein the reception server and the recognition server are configured to utilize http-protocol in transmission.
